# EUROPEAN PATENT SPECIFICATION

(11) **EP 3 706 926 B1**
(45) Date of publication and mention of the grant of the patent: **07.06.2023**
(21) Application number: 18833723.2
(22) Date of filing: 07.11.2018
(51) Int. Cl.: B09B 3/00, B09B 5/00, C02F 9/00

(54) **PLANT AND METHOD FOR THE TREATMENT OF WASTE, IN PARTICULAR WASTE FROM LABORATORIES FOR MEDICAL ANALYSIS**
VORRICHTUNG UND VERFAHREN FÜR ABFÄLLEBEHANDLUNG, INSBESONDERE FÜR ABFÄLLE VON LABORATORIEN FÜR MEDIZINISCHE ANALYSE.
DISPOSITIF ET MÉTHODE POUR LE TRAITEMENT DE DÉCHETS, EN PARTICULIER POUR LE TRAITEMENT DES DÉCHETS ISSUS DE LABORATOIRES D'ANALYSES MÉDICALES.

(30) Priority: 10.11.2017 IT 201700128463
(43) Date of publication of application: 16.09.2020
(73) Proprietor: Newster System S.r.l., 47853 - Coriano (IT)
(72) Inventor: BENEDETTINI, Elisa, 47924 Rimini (RN) (IT); MAGRINI, Gianluca, 47838 Riccione (RN) (IT); RONCHI, Gilberto, 47924 Rimini (RN) (IT); CATAPANO, Enrico, 47923 Rimini (RN) (IT); CASALBONI, Giorgio, 47921 Rimini (RN) (IT)
(74) Representative: Montebelli, Marco
(86) International application number: PCT/IT2018/000144
(87) International publication number: WO 2019/092761

(56) References cited:
- EP-A1- 1 995 221
- WO-A1-2008/028493
- WO-A1-2015/033218
- US-A- 5 178 755

## Description

### Technical field

This invention relates to a plant and a method for the treatment of waste, in particular waste from laboratories for medical analysis.

Waste from laboratories for medical analysis may be of various types depending on the activities carried out.

Such waste may, for example, be waste water from clinical laboratories, which may contain organic and inorganic chemical substances, blood and bodily fluids, surfactants, solvents, formaldehyde, buffers, diluted acids and mineral alkalis, phosphates, oxidisers, traces of heavy metals.

Waste discharged from research laboratories may be even more heterogeneous, since it may contain oxidisers (such as hypochlorite, iodine, peroxides and others), proteins deriving from tissues, dyes, heavy metals from analytical reagents, organic solvents, phosphates and detergents used for disinfecting instruments.

### Background Art

According to a first known method, laboratories collect all of the waste produced, classify it according to type and place it in suitable containers. The containers are kept in suitable locations at production sites and are strictly catalogued according to the products contained in them, then removed by companies authorised to transport, store and dispose of them, based on identification codes.

That method is unsatisfactory in terms of the chemical and biological risk, as well as involving considerable personnel, means of transport, special storage areas, with a consequent economic cost.

Alternatively, waste may be treated directly at production sites by means of various technologies.

These include a known type of plant in which the waste is treated with reagents so as to cause oxidation of the pollutants, a treatment known as "Fenton". In this plant, after the reaction, the solid part is removed from the plant, the liquid part is checked and if necessary can be further treated.

To indicate the degree of pollution of the waste, a key parameter is used, known as the COD (Chemical Oxygen Demand). In the known type of plant, when assessing the COD parameter, the treatment is found to be non-optimal for some types of waste. Moreover, if after the reaction the waste does not have characteristics suitable for discharge, it must be immediately re-treated. Document US5178755 discloses an apparatus for the treatment of wastewater containing wastes which are typically high in their biochemical oxygen demand (BOD), and their suspended solids (SS) levels. In the apparatus disclosed in document US5178755 ozonated liquid is mixed within a multistage clarifier system with wastewater to be treated and suspended solids are removed, the clarified effluent is filtered and exposed to ultraviolet radiation source and ozone is injected into the irradiated effluent and received within a contact tower where reaction between the contaminants and ozone takes place.

### Disclosure of the Invention

The aim of this invention is to improve the treatment of waste from laboratories, making it more effective. A further aim of this invention is to obtain an effective treatment for various types of waste.

According to this invention, a plant is supplied having the features defined in claim 1.

Pre-treatment of the waste acts to change at least one physical and/or chemical component of the waste in such a way as to render more effective the subsequent "Fenton" reaction and to reduce the COD (Chemical Oxygen Demand) of the clarified waste. Therefore, the pre-treatment allows even waste which is usually difficult to treat to be rendered suitable for the treatment.

According to advantageous embodiments, the pre-treatment may comprise heating the waste.

The treatment with ozone may also be applied downstream of the reaction tank, in particular after filtration of the waste and before discharge.

The system for treatment of the waste with ozone comprises an ozone generator suitable for introducing ozone into a mixer of ozone with the waste, and a tank for treatment connected to said ozone mixer. The ozone mixer comprises a Venturi tube and a pipe downstream of said Venturi tube, wherein the pipe is configured to maintain the waste under a preferred pressure. The pipe is configured like a serpentine coil, for maintaining the liquid under pressure favouring mixing of the gaseous ozone in the liquid.

According to an advantageous embodiment, the filtration system comprises a first group with mechanical filter and a second group with filter cartridge. Therefore, the waste can be filtered in two different ways, either immediately after the reaction, first passing in the first filtration group with mechanical filter for stopping the solid residue of the waste and then in the second filtration group with filter cartridge, or after sedimentation of the waste in the reaction tank, by introducing the clarified waste directly into the second filtration group with filter cartridge.

Advantageously, the filtration flow rate in said first group with mechanical filter is controlled, in such a way that filtration occurs slowly.

Preferably the pressure in said first group with mechanical filter is controlled, which allows one to establish whether or not the filter needs changing.

In one advantageous embodiment, there is at least one Redox sensor in said reaction tank, for controlling the start of the reaction and temporarily setting aside the waste if it is not considered suitable for the treatment.

According to another aspect of this invention, a method for the treatment of waste, in particular waste from laboratories for medical analysis, comprises the features of claim 6.

### Brief description of drawings

Further advantages and features of this invention are more apparent in the detailed description which follows, with reference to the accompanying drawings, which illustrate an example of it without limiting the scope of the invention, in which:
- Figure 1 illustrates a plant for the treatment of waste;

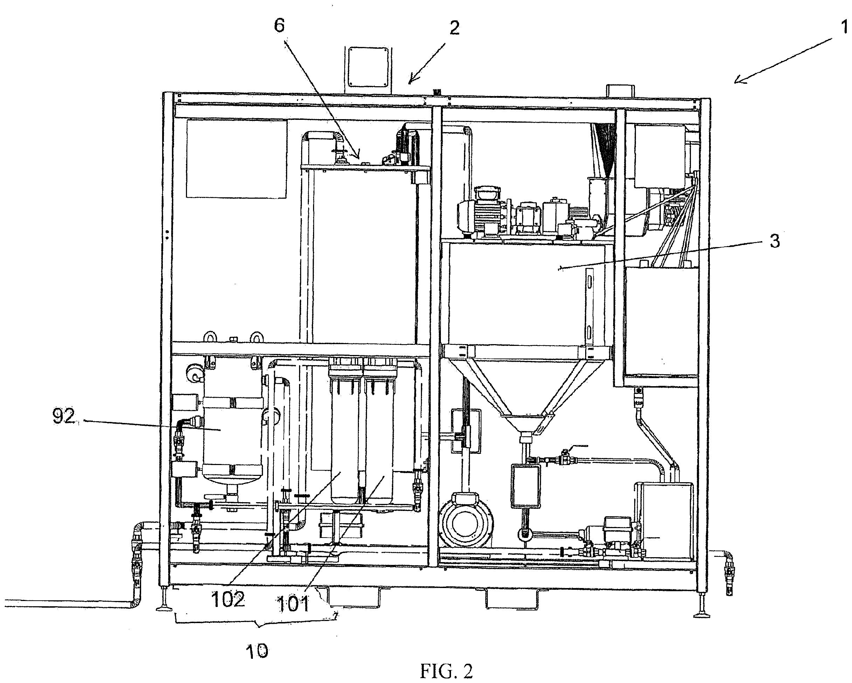

- Figure 2 is a front view of a part of the plant of Figure 1;

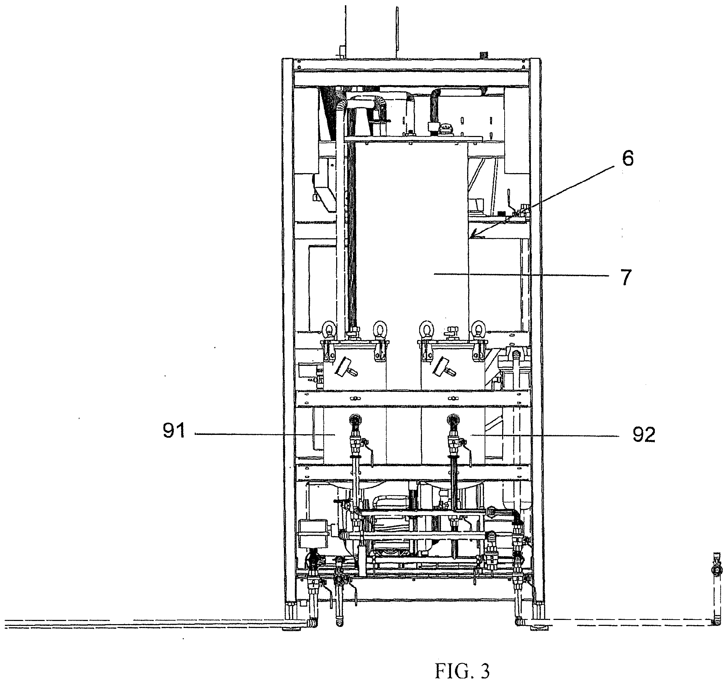

- Figure 3 is a side view of a part of the plant of Figure 1;
- Figure 4 illustrates the filtration system of the plant of Figure 1;
- Figure is a front view of an embodiment of equipment for the treatment of waste with ozone;
- Figure 6 illustrates an operating diagram of an embodiment of the plant according to this invention.

### Preferred Embodiments of the Invention

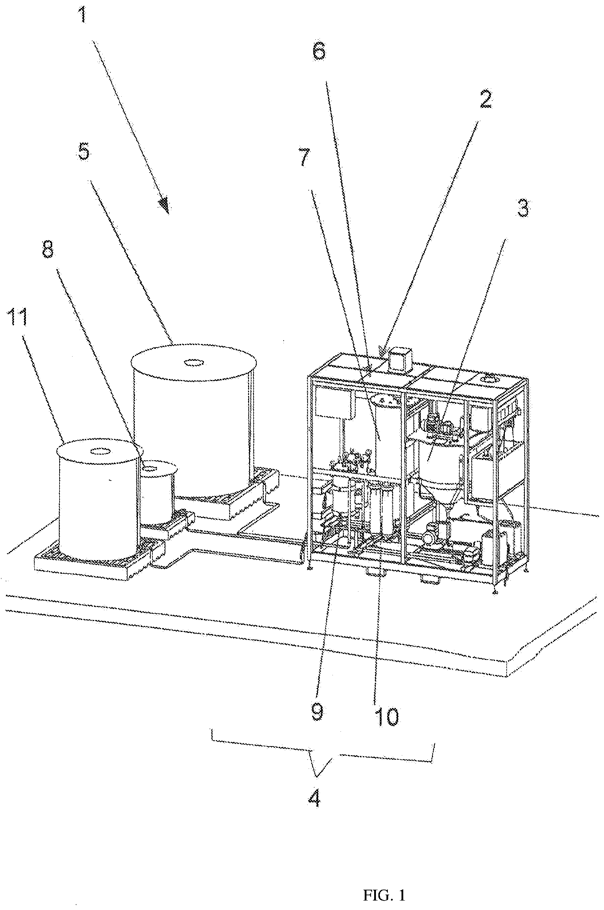

In Figure 1 the numeral 1 denotes a plant for the treatment of waste, in particular waste from laboratories for medical analysis.

According to the invention, the plant 1 comprises equipment 2 for pre-treatment of waste designed to change at least one physical and/or chemical characteristic of the waste, at least one reaction tank 3, located downstream of said equipment 2 for pre-treatment, and at least one filtration system 4 located downstream of said reaction tank 3.

The method for the treatment of waste according to the invention comprises the steps of:
a) pre-treatment of waste to change at least one physical and/or chemical characteristic of the waste;
b) introduction of the waste into a reaction tank;
c) introduction of at least one reagent in said reaction tank to abate the pollution load in the waste;
d) filtration of the waste arriving from the reaction tank;
e) discharge of the filtered waste.

As illustrated in Figure 1, the plant 1 comprises a compensation tank 5 into which known volumes of one or more wastes from different waste accumulation tanks (not illustrated) are transferred. In this way it is possible to know the composition of the waste to be treated in the plant. There is a filter for emissions located on the compensation tank 5.

As illustrated in Figure 1, the pre-treatment equipment 2 comprises a heating system 6 for heating the waste, into which a known quantity of waste is transferred from the compensation tank 5. The increase in the temperature of the waste allows the "Fenton" reaction to be rendered more effective.

The heating system 6 comprises a stainless steel container 7 in which there are circular electric bands which are regulated until a predetermined temperature is reached, in such a way as to bring the waste to an optimum temperature. A temperature sensor is positioned inside the steel container.

When the predetermined temperature is reached, preferably all of the liquid present in the container is introduced into the tank 3 in which the "Fenton"-type chemical reaction occurs, by means of at least one reagent.

A control system (not illustrated) controls the introduction of predetermined quantities of various reagents into the tank, depending on the characteristics of the waste to be treated. The quantities of reagent sent are calibrated in relation to the COD (Chemical Oxygen Demand). The reagents are preferably introduced into the tank 3 by means of suitable pumps. The reagents are preferably in liquid form. There may be one or more reagents in solid form, which are appropriately dosed directly in the reaction tank 3. There is a filter for emissions located on the reaction tank 3 and/or on the container 7 of the heating system 6.

Inside the reaction tank 3 there is a stirrer which allows mixing of the waste with the various reagents. Inside the tank 3 there is also at least one pH sensor. The pH sensor also allows regulation of the quantity of the last reagent for neutralising the waste, in such a way that the waste reaches a basic pH at the end of the reaction. Advantageously, inside the tank 3 there is at least one Redox sensor. The Redox sensor allows the start of the reaction to be determined and, if necessary, regulation of the introduction of a further quantity of reagents. Moreover, the Redox sensor allows an assessment of whether or not the "Fenton" reaction has started after a predetermined time. If the reaction has not started, it is possible to add a further quantity of reagents. If the Redox sensor indicates that the reaction has not started even after having added reagents, the waste is not considered suitable for the treatment and is introduced into a suitable tank 8. That waste will then be analysed and re-introduced into the compensation tank 5 together with other waste in order to obtain waste which is suitable for the "Fenton" treatment.

According to an advantageous embodiment, the filtration system 4 comprises a first filtration group 9 with mechanical filter and a second filtration group 10 with filter cartridge. The mechanical filter of the first filtration group 9 is preferably a bag filter.

That configuration allows the plant to operate in two modes.

In a first operating mode, filtration takes place immediately after the "Fenton" reaction. In particular, all of the waste present in the reaction tank 3 is filtered in one go immediately after the reaction. The waste passes in the first group 9 with mechanical filter.

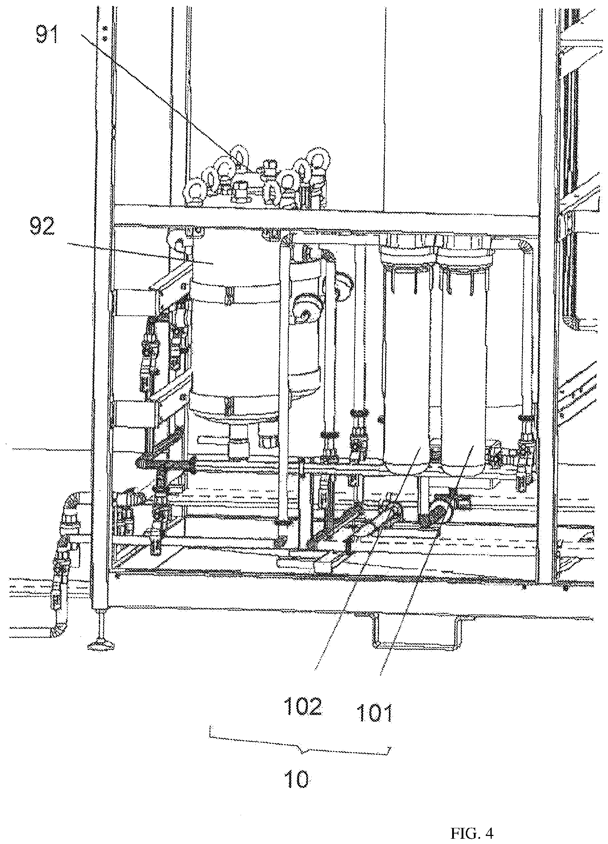

As shown in Figure 4, the first group 9 comprises one or more mechanical filters 91, 92, each having inside it filtering sleeves which stop the solid part of the waste. The mechanical filters 91, 92 are preferably bag filters. The mechanical filters 91, 92 may be connected in series or in parallel. Preferably, the mechanical filters 91, 92 may be isolated and operate individually. Advantageously, the filtration flow rate in the mechanical filters 91, 92 is regulated in such a way that filtration occurs very slowly. Advantageously, the pressure is controlled, which allows one to establish whether or not the filter needs changing. There may be an indication and/or a plant stop if the pressure increases above a predetermined value, for example approximately 4 bar.

The waste then passes in the second filtration group 10 with filter cartridge. The second group 10 comprises one or more cartridge filters 101, 102. The cartridge filters 101, 102 may be connected in series.

In a second operating mode, there is a wait for waste sedimentation in the reaction tank 3, in such a way that the clarified waste is separated from the waste containing solid suspensions within the reaction tank 3, in particular the clarified waste remaining in the upper part of the tank 3 and the waste containing solid suspensions remaining in the lower part of the tank 3. Advantageously, the two parts are filtered separately. The waste containing the solid suspensions is introduced into the first group 9 with mechanical filter and then into the second group 10 with filter cartridge. The clarified waste is introduced directly into the second group 10 with filter cartridge and not into the group 9 with mechanical filter.

There may be a suitable instrument for establishing separation of the clarified waste and suspension.

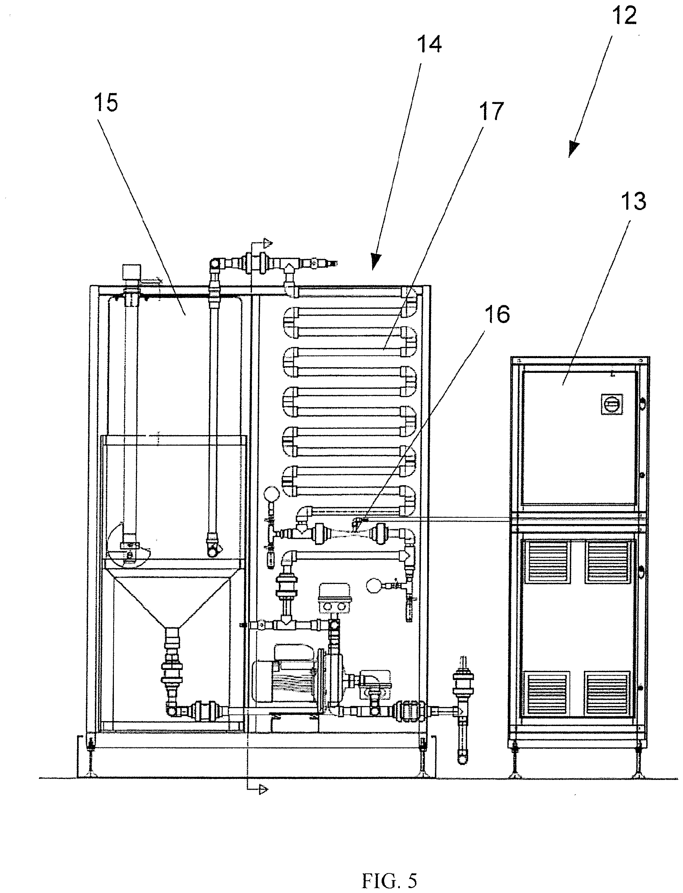

According to an advantageous embodiment, the plant 1 comprises a final collection tank 11 located downstream of the filtration system 4. Preferably the tank 11 is suitable for cooling the clarified liquid before discharge into the sewerage system. For that cooling, inside the tank 11 there is a double path which allows the tank to be loaded in the central part and unloaded from the lateral portions. There is also a drawing point for sampling the clarified liquid. Figure 5 illustrates a system 12 for the treatment of waste with ozone. That treatment allows oxidation of some polluting components of the waste, therefore changing its chemical - physical characteristics.

According to the embodiment illustrated the system 12 for treatment with ozone comprises an ozone generator 13 suitable for introducing ozone in a mixer 14 of ozone with the waste, and a tank for treatment 15 connected to the ozone mixer 14. The ozone mixer 14 comprises a Venturi tube 16 and a pipe 17 downstream of the Venturi tube 16, wherein in the pipe 17 is configured to maintain the waste under a predetermined pressure. The pipe 17 is configured substantially like a serpentine coil. That configuration allows the liquid to be maintained under pressure, favouring mixing of the gaseous ozone in the liquid.

The treatment is a loop, the mixing is forced. In the tank for treatment 15 there is at least one temperature sensor and at least one Redox sensor. There is a filter for emissions located on the tank for treatment 15.

The waste is taken from the lower part of the tank for treatment 15 and introduced into the Venturi tube 16 by means of a pump. The Venturi tube 16 is connected to the ozone generator 13, therefore in the Venturi tube 16 the waste makes contact with the ozone. The waste in contact with the ozone then circulates in the serpentine coil pipe 17, preferably from the bottom upwards, and is re-introduced into the tank for treatment 15. Advantageously, the reintroduction is performed below the level of the waste and not by dropping in under gravity, so as to reduce foam. Alternatively, there may be a foam reducer if the water is introduced from above, in the upper part of the tank for treatment, and/or floating plastic rings for reducing foam formation. In addition it is possible to add at least one inert chemical reagent for reducing foam formation.

According to the invention, the system 12 for ozone treatment is included in the waste pre-treatment equipment. The pre-treatment using ozone allows an initial abatement of the pollutant load and a chemical and/or physical change in the waste, making the subsequent "Fenton" reaction more effective. In this case, the waste is introduced into the tank for treatment 15 starting from the compensation tank 5 and is taken from the tank for treatment 15 so that it can be introduced into the reaction tank 3, without preliminary heating of the waste. The pre-treatment with ozone allows a reduction in the initial COD which allows the use of a smaller quantity of reagents and therefore limiting of the solid residue after the reaction.

The pre-treatment may comprise heating the waste. The pre-treatment equipment 2 may therefore comprise only the system 12 for treatment with ozone, or both systems 6, 12.

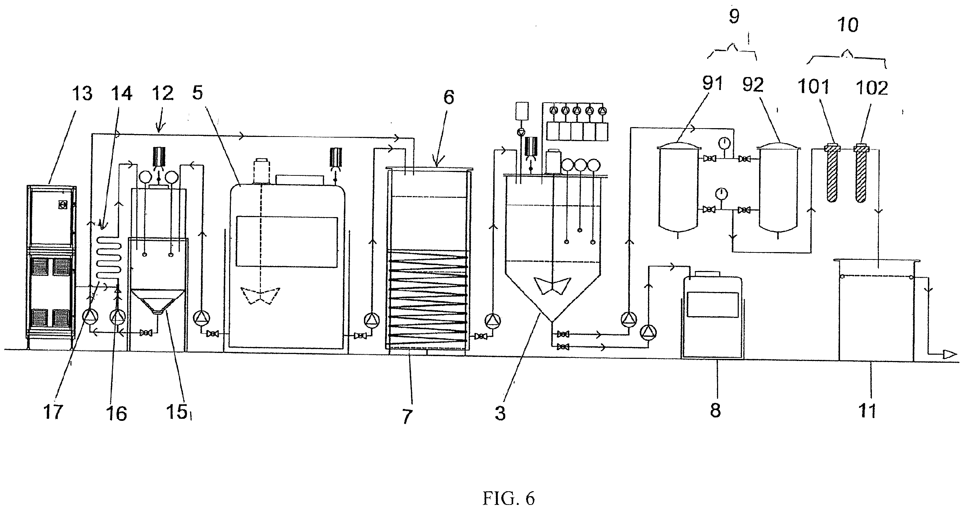

An example of an embodiment in which the pre-treatment equipment 2 comprises both the heating system 6 and the treatment system 12 is schematically illustrated in Figure 6.

The waste taken from the compensation tank 5 can be introduced directly into the steel container 7 of the heating system 6 or into the tank for treatment 15 of the system 12 for treatment with ozone. The waste is taken from the tank for treatment 15 and introduced into the steel container 7 of the heating system 6. By means of the operation of suitable valves, it is possible to prevent the direct passage of the waste in the heating system 6, or to prevent the passage of the waste in the system 12 for treatment with ozone.

From the container 7 of the heating system 6 the waste is introduced into the reaction tank 3. At the end of the reaction or after the sedimentation step, the waste is filtered by passing through the mechanical filters 91, 92, of the first filtration group and then through the cartridge filters 101, 102, of the second filtration group 10. After filtration the waste is introduced into the collection tank 11, before being discharged into the sewerage system. If the Redox sensor indicates that the reaction has not started, the unsuitable waste is discharged into the suitable tank 8.

In a further embodiment, the system 12 for treatment with ozone is located downstream of the reaction tank 3 and therefore constitutes a post-treatment of the waste. Therefore, in this case there is a step of treatment with ozone after the filtration step, before discharging of the clarified waste.

## Claims

1. A plant for the treatment of waste, in particular waste from laboratories for medical analysis, comprising an equipment (2) for pre-treatment of waste designed to change at least one physical and/or chemical characteristic of the waste, at least one reaction tank (3) located downstream of said equipment (2) for pre-treatment, and at least one filtration system (4) located downstream of said reaction tank (3), **characterised in that** said equipment (2) for pre-treatment comprises a system (12) for treatment of waste with ozone, said system (12) comprising an ozone generator (13) designed to introduce ozone in a mixer (14) of ozone with the waste and a tank for treatment (15) connected to said ozone mixer (14), the ozone mixer (14) comprising a Venturi tube (16) and a pipe (17) located downstream of said Venturi tube, wherein said pipe (17) is configured like a serpentine to maintain the waste under a predetermined pressure.

2. The plant according to claim 1, **characterised in that** said equipment (2) for pre-treatment comprises a heating system (6) for waste.

3. The plant according to any one of the preceding claims, **characterised in that** it comprises a system (12) for post-treatment of waste with ozone, located downstream of the reaction tank (3).

4. The plant according to any one of the preceding claims, **characterised in that** said filtration system (4) comprises a first group (9) with mechanical filter, wherein the filter has inside it filtering sleeves which stop the solid part of the waste, and a second group (10) with filter cartridge.

5. The plant according to any one of the preceding claims, **characterised in that** it comprises at least one Redox sensor within said reaction tank (3).

6. A method for the treatment of waste, in particular waste from laboratories for medical analysis, comprising the steps of:
a) pre-treatment of waste to change at least one physical and/or chemical characteristic of waste;
b) introduction of waste into a reaction tank (3);
c) introduction of at least one reagent in said reaction tank (3) to abate the pollution load in the waste;
d) filtration of waste arriving from said reaction tank (3);
e) discharge of filtered waste, **characterised in that** the pre-treatment step comprises introducing ozone from an ozone generator (13) in a mixer (14) of ozone with the waste, the ozone mixer (14) being connected to a tank for treatment (15) of the waste and comprising a Venturi tube (16) and a pipe (17) located downstream of said Venturi tube (16), wherein said pipe (17) is configured like a serpentine to maintain the waste under a predetermined pressure.

7. The method according to claim 6, **characterised in that** the step of pre-treatment of waste comprises the heating of waste.

8. The method according to any one of preceding claims 6-7, **characterised in that** said step of filtration of waste takes place immediately after the reaction step.

9. The method according to any one of the preceding claims 6-8, **characterised in that** said step of filtration of waste comprises the introduction of the waste from the reaction tank (3) at first in a first filtration group (9) with mechanical filter to block the solid residue of waste, wherein the filter has inside it filtering sleeves which stop the solid part of the waste, and then in a second filtration group (10) with filter cartridge.

10. The method according to any one of the preceding claims 6-7, **characterised in that** said step of filtration takes place after waste sedimentation in the reaction tank (3), in such a way that the clarified waste is separated from the waste containing solid suspensions within the reaction tank (3).

11. The method according to claim 10, **characterised in that** after sedimentation the waste containing solid suspensions is introduced in a first filtration group (9) with mechanical filter, wherein the filter has inside it filtering sleeves which stop the solid part of the waste, and then in a second filtration group (10) with filter cartridge and the clarified waste is introduced directly in the second filtration group (10) with filter cartridge.

12. The method according to claim 9 or 11, **characterised in that** it controls the filtration flow rate and/or the pressure within said first group (9) with mechanical filter.

13. The method according to any one of the preceding claims from 6 to 12, **characterised in that** it comprises a step of post-treatment of waste with ozone following the step of filtration and preceding the step of discharge.

14. The method according to any one of the preceding claims from 6 to 13, **characterised in that** it controls the start of reaction by means of a Redox sensor placed within said reaction tank (3).

## Patentansprüche

1. Eine Vorrichtung zur Abfallbehandlung, insbesondere von Abfall aus Laboren für medizinische Analysen, eine Ausrüstung (2) zur Vorbehandlung von Abfall, konzipiert, um mindestens ein physikalisches und/oder chemisches Merkmal des Abfalls zu verändern, mindestens einen Reaktionsbehälter (3), der sich nach besagter Ausrüstung (2) zur Vorbehandlung befindet, und mindestens ein Filtersystem (4), das sich nach besagtem Reaktionsbehälter (3) befindet, beinhaltend, **gekennzeichnet dadurch, dass** besagte Ausrüstung (2) zur Vorbehandlung dabei ein System (12) zur Abfallbehandlung mit Ozon beinhaltet, besagtes System (12) beinhaltet dabei einen Ozongenerator (13), konzipiert, um Ozon in einen Ozonmischer (14) mit dem Abfall einzuführen, und einen Behandlungsbehälter (15), der mit besagtem Ozonmischer (14) verbunden ist, der Ozonmischer (14) beinhaltet dabei ein Venturirohr (16) und eine Rohrleitung (17), die sich nach besagtem Venturirohr befindet, wobei besagte Rohrleitung (17) wie eine Serpentine geformt ist, um den Abfall unter einem vorher festgelegten Druck zu halten.

2. Die Vorrichtung nach dem Patentanspruch 1, **gekennzeichnet dadurch, dass** besagte Ausrüstung (2) zur Vorbehandlung ein Heizsystem (6) für den Abfall beinhaltet.

3. Die Vorrichtung nach jedem der vorigen Patentansprüche, **gekennzeichnet dadurch, dass** sie ein System (12) zur Abfallnachbehandlung mit Ozon beinhaltet, das sich nach dem Reaktionsbehälter (3) befindet.

4. Die Vorrichtung nach jedem der vorigen Patentansprüche, **gekennzeichnet dadurch, dass** besagtes Filtersystem (4) eine erste Gruppe (9) mit mechanischem Filter, wobei der Filter in sich Filterschläuche hat, die den festen Teil des Abfalls aufhalten, und eine zweite Gruppe (10) mit Filtereinsatz beinhaltet.

5. Die Vorrichtung nach jedem der vorigen Patentansprüche, **gekennzeichnet dadurch, dass** sie mindestens einen Redox-Sensor in besagtem Reaktionsbehälter (3) beinhaltet.

6. Ein Verfahren zur Abfallbehandlung, insbesondere von Abfall aus Laboren für medizinische Analysen, folgende Schritte beinhaltend:
a) die Vorbehandlung von Abfall, um mindestens ein physikalisches und/oder chemisches Merkmal des Abfalls zu verändern;
b) die Einführung des Abfalls in einen Reaktionsbehälter (3);
c) die Einführung mindestens eines Reagenz in besagten Reaktionsbehälter (3), um die Schadstoffbelastung im Abfall zu mindern;
d) die Filtration von Abfall, der von besagtem Reaktionsbehälter (3) kommt;
e) die Ausleitung von gefiltertem Abfall, **gekennzeichnet dadurch, dass** der Schritt der Vorbehandlung beinhaltet, Ozon aus einem Ozongenerator (13) in einen Ozonmischer (14) mit dem Abfall einzuführen, der Ozonmischer (14) ist dabei mit einem Behälter zur Behandlung (15) des Abfalls verbunden und beinhaltet dabei ein Venturirohr (16) und eine Rohrleitung (17), die sich nach besagtem Venturirohr (16) befindet, wobei besagte Rohrleitung (17) wie eine Serpentine geformt ist, um den Abfall unter einem vorher festgelegten Druck zu halten.

7. Das Verfahren nach dem Patentanspruch 6, **gekennzeichnet dadurch, dass** der Schritt der Vorbehandlung des Abfalls das Erhitzen von Abfall beinhaltet.

8. Das Verfahren nach jedem der vorigen Patentansprüche 6 - 7, **gekennzeichnet dadurch, dass** besagter Schritt der Filtration des Abfalls sofort nach dem Reaktionsschritt stattfindet.

9. Das Verfahren nach jedem der vorigen Patentansprüche 6 - 8, **gekennzeichnet dadurch, dass** besagter Schritt der Filtration des Abfalls die Einführung des Abfalls von dem Reaktionsbehälter (3) zuerst in eine erste Filtergruppe (9) mit einem mechanischen Filter, um den festen Abfallrückstand zu blockieren, wobei der Filter in sich Filterschläuche hat, die den festen Teil des Abfalls aufhalten, und dann in eine zweite Filtergruppe (10) mit Filtereinsatz beinhaltet.

10. Das Verfahren nach jedem der vorigen Patentansprüche 6 - 7, **gekennzeichnet dadurch, dass** besagter Schritt der Filtration nach der Sedimentation im Reaktionsbehälter (3) stattfindet, auf solche Art, dass der geklärte Abfall im Reaktionsbehälter (3) von dem Abfall, der Feststoffsuspensionen enthält, getrennt wird.

11. Das Verfahren nach dem Patentanspruch 10, **gekennzeichnet dadurch, dass** nach der Sedimentation der Abfall, der Feststoffsuspensionen enthält, in eine erste Filtergruppe (9) mit mechanischem Filter eingeführt wird, wobei der Filter in sich Filterschläuche hat, die den festen Teil des Abfalls aufhalten, und dann in eine zweite Filtergruppe (10) mit Filtereinsatz und der geklärte Abfall direkt in die zweite Filtergruppe (10) mit Filtereinsatz eingeführt wird.

12. Das Verfahren nach dem Patentanspruch 9 oder 11, **gekennzeichnet dadurch, dass** es die Filtrationsdurchflussmenge und/oder den Druck innerhalb besagter erster Gruppe (9) mit mechanischem Filter kontrolliert.

13. Das Verfahren nach jedem der vorigen Patentansprüche 6 bis 12, **gekennzeichnet dadurch, dass** es einen Schritt der Abfallnachbehandlung mit Ozon beinhaltet, auf den Schritt der Filtration folgend und dem Schritt der Ausleitung vorausgehend.

14. Das Verfahren nach jedem der vorigen Patentansprüche 6 bis 13, **gekennzeichnet dadurch, dass** es den Beginn der Reaktion mithilfe eines Redox-Sensors kontrolliert, der in besagtem Reaktionsbehälter (3) angebracht ist.

## Revendications

1. Une installation pour le traitement de déchets, en particulier de déchets issus de laboratoires d'analyses médicales, comprenant un équipement (2) pour le pré-traitement de déchets destiné à modifier au moins une caractéristique physique et/ou chimique des déchets, au moins une cuve de réaction (3) située en aval dudit équipement (2) de pré-traitement, et au moins un système de filtration (4) situé en aval de ladite cuve de réaction (3), **caractérisée en ce que** ledit équipement (2) de pré-traitement comprend un système (12) pour le traitement des déchets avec ozone, ledit système (12) comprenant un générateur d'ozone (13) destiné à introduire de l'ozone dans un mélangeur (14) d'ozone avec les déchets et une cuve de traitement (15) raccordée audit mélangeur d'ozone (14), le mélangeur d'ozone (14) comprenant un tube Venturi (16) et un conduit (17) situé en aval dudit tube Venturi, où ledit conduit (17) est configuré comme un serpentin pour maintenir les déchets à une pression prédéfinie.

2. L'installation selon la revendication 1, **caractérisée en ce que** ledit équipement (2) de pré-traitement comprend un système (6) de chauffage des déchets.

3. L'installation selon l'une quelconque des revendications précédentes, **caractérisée en ce qu'**elle comprend un système (12) pour le post-traitement des déchets avec ozone, situé en aval de la cuve de réaction (3).

4. L'installation selon l'une quelconque des revendications précédentes, **caractérisée en ce que** ledit système de filtration (4) comprend un premier groupe (9) à filtre mécanique, où le filtre possède à l'intérieur des manchons filtrants qui arrêtent la partie solide des déchets, et un deuxième groupe (10) à cartouche filtrante.

5. L'installation selon l'une quelconque des revendications précédentes, **caractérisée en ce qu'**elle comprend au moins un capteur Redox à l'intérieur de ladite cuve de réaction (3).

6. Un procédé pour le traitement de déchets, en particulier de déchets issus de laboratoires d'analyses médicales, comprenant les étapes de :
a) pré-traitement des déchets pour modifier au moins une caractéristique physique et/ou chimique des déchets ;
b) introduction des déchets dans une cuve de réaction (3) ;
c) introduction d'au moins un réactif dans ladite cuve de réaction (3) pour réduire la charge polluante des déchets ;
d) filtration des déchets provenant de ladite cuve de réaction (3) ;
e) évacuation des déchets filtrés,
**caractérisé en ce que** l'étape de pré-traitement comprend l'introduction d'ozone depuis un générateur d'ozone (13) dans un mélangeur (14) d'ozone avec les déchets, le mélangeur d'ozone (14) étant raccordé à une cuve (15) de traitement des déchets et comprenant un tube Venturi (16) et un conduit (17) situé en aval dudit tube Venturi (16), où ledit conduit (17) est configuré comme un serpentin pour maintenir les déchets à une pression prédéfinie.

7. Le procédé selon la revendication 6, **caractérisé en ce que** l'étape de pré-traitement des déchets comprend le chauffage des déchets.

8. Le procédé selon l'une quelconque des revendications 6-7 précédentes, **caractérisé en ce que** ladite étape de filtration des déchets a lieu immédiatement après l'étape de réaction.

9. Le procédé selon l'une quelconque des revendications 6-8 précédentes, **caractérisé en ce que** l'étape de filtration des déchets comprend l'introduction des déchets depuis la cuve de réaction (3) d'abord dans un premier groupe de filtration (9) à filtre mécanique pour bloquer les résidus solides des déchets, où le filtre possède à l'intérieur des manchons filtrants qui arrêtent la partie solide des déchets, puis dans un deuxième groupe de filtration (10) à cartouche filtrante.

10. Le procédé selon l'une quelconque des revendications 6-7 précédentes, **caractérisé en ce que** ladite étape de filtration a lieu après sédimentation des déchets dans la cuve de réaction (3), de manière à ce que les déchets clarifiés soient séparés des déchets contenant des suspensions solides à l'intérieur de la cuve de réaction (3).

11. Le procédé selon la revendication 10, **caractérisé en ce que**, après la sédimentation, les déchets contenant des suspensions solides sont introduits dans un premier groupe de filtration (9) à filtre mécanique, où le filtre possède à l'intérieur des manchons filtrants qui arrêtent la partie solide des déchets, puis dans un deuxième groupe de filtration (10) à cartouche filtrante et les déchets clarifiés sont introduits directement dans le deuxième groupe de filtration (10) à cartouche filtrante.

12. Le procédé selon la revendication 9 ou 11, **caractérisé en ce qu'**il contrôle le débit de filtration et/ou la pression à l'intérieur dudit premier groupe (9) à filtre mécanique.

13. Le procédé selon l'une quelconque des revendications précédentes de 6 à 12, **caractérisé en ce qu'**il comprend une étape de post-traitement des déchets avec ozone qui suit l'étape de filtration et précède l'étape d'évacuation.

14. Le procédé selon l'une quelconque des revendications précédentes de 6 à 13, **caractérisé en ce qu'**il contrôle le démarrage de la réaction par le biais d'un capteur Redox placé à l'intérieur de ladite cuve de réaction (3).
